# FASCICULE DE BREVET EUROPEEN

(11) **EP 3 310 503 B1**
(45) Date de publication et mention de la délivrance du brevet: **28.08.2019**
(21) Numéro de dépôt: 16733650.2
(22) Date de dépôt: 30.05.2016
(51) Int. Cl.: B07C 7/00

(54) **DISPOSITIF D'AIDE A LA FUSION MANUELLE D'OBJETS POSTAUX DANS UNE PILE D'ARTICLES DE COURRIER**
HILFSMITTEL ZUM MANUELLEN VEREINEN VON POSTSTÜCKEN MIT EINEM STAPEL VON POSTSTÜCKEN
DEVICE FOR ASSISTING MANUAL MERGING OF MAIL OBJECTS WITH A PILE OF MAIL ITEMS

(30) Priorité: 17.06.2015 FR 1555534
(43) Date de publication de la demande: 25.04.2018
(73) Titulaire: Solystic, 92220 Bagneux (FR)
(72) Inventeur: MIETTE, Emmanuel, 95210 Saint Gratien (FR); VOLTA, Bruno, 91190 Gif sur Yvette (FR)
(74) Mandataire: Prugneau, Philippe
(86) Numéro de dépôt international: PCT/FR2016/051286
(87) Numéro de publication internationale: WO 2016/203127

(56) Documents cités:
- WO-A1-2014/087069
- DE-A1-102010 043 389

## Description

### Domaine technique

Le domaine de l'invention est le tri postal. L'invention concerne plus particulièrement un dispositif d'aide à la fusion manuelle d'objets postaux avec des articles de courrier déjà triés en machine selon une certaine séquence, par exemple pour une distribution selon la tournée du facteur.

Ces objets postaux sont en particulier mais non exclusivement des objets postaux non mécanisables qui ne sont pas actuellement triés automatiquement en machine de tri.

### Technique antérieure

Les machines et les procédés de tri postal utilisés pour la préparation de la tournée du facteur peuvent être intégralement automatiques ou peuvent comporter des étapes dans lesquelles l'intervention d'un Opérateur est nécessaire, notamment dans le cas de traitement d'objets postaux non mécanisables.

A ce sujet, on connait déjà du brevet WO2014/087069 un procédé pour fusionner un objet postal dans du courrier trié dans lequel une aide par désignation visuelle de l'emplacement d'insertion de l'objet postal dans la pile est effectuée.

On connait également déjà du brevet DE 10 2010 043 389 un procédé pour fusionner manuellement des objets postaux non mécanisables avec du courrier trié en machine. Dans ce procédé connu, une aide à la fusion est apportée à l'Opérateur chargé de réaliser la fusion. Cette aide consiste à afficher sur un écran d'affichage placé à côté de l'Opérateur, l'image d'un article de courrier de référence qui doit précéder ou qui doit suivre dans la séquence ordonnée des articles de courrier l'objet postal à fusionner.

Ensuite, l'Opérateur balaie la séquence d'articles de courrier jusqu'à identifier visuellement l'article de courrier de référence, suite à quoi il peut insérer au bon endroit l'objet postal dans la séquence ordonnée des articles de courrier.

Ce type de fusion manuelle dans la préparation de la tournée du facteur nécessite un appareillage qui ne répond pas aux exigences actuelles de réduction des coûts, du temps et de l'espace de travail.

### Exposé de l'invention

Le but de l'invention est donc de remédier à ces inconvénients.

L'idée à la base de l'invention consiste plus particulièrement à apporter à l'Opérateur un dispositif pour l'aide à la fusion qui soit plus simple d'utilisation et plus ergonomique.

A cet effet, l'invention a donc pour objet un dispositif d'aide à la fusion d'objets postaux dans une pile d'articles de courrier déjà triés selon une certaine séquence, comprenant une table de fusion qui s'étend longitudinalement entre deux extrémités et apte à stocker ladite pile d'articles de courrier sur chant entre lesdites extrémités, une caméra apte à former une image numérique d'un objet postal courant à fusionner dans la pile d'articles de courrier, et une unité de contrôle/commande avec un écran d'affichage apte à afficher sur l'écran une indication représentative d'une position d'insertion de l'objet postal courant dans la pile d'articles de courrier, caractérisé en ce que l'écran d'affichage est disposé à une extrémité de la table de fusion en tête de la séquence d'articles de courrier en pile sur chant de telle sorte qu'un Opérateur se trouvant face à l'écran a dans son champ de vision la pile d'articles de courrier qui s'étend longitudinalement, en ce qu'il comprend en outre une autre caméra apte à former une image numérique de la pile d'articles de courrier avec le même angle de vue que l'Opérateur, et en ce que l'unité de contrôle/commande est agencée pour afficher sur l'écran d'affichage l'image de la pile d'articles de courrier formée par ladite autre caméra avec un repère désignant sur l'image de la pile d'articles de courrier ladite position d'insertion.

Le dispositif selon l'invention peut avantageusement présenter les particularités suivantes :
- ladite autre caméra est fixée à ladite extrémité de la table de fusion face à l'écran à l'arrière de l'Opérateur de telle manière à former l'image numérique de la pile d'articles de courrier avec le même angle de vue que l'Operateur et sans avoir l'Opérateur dans son champ de vision ;
- ladite autre caméra est intégrée à des lunettes de réalité augmentée destinées à être portées par l'Opérateur ;
- la caméra qui est apte à former des images numériques de l'objet postal courant est montée en hauteur sur un support fixé sur un flanc longitudinal de la table de fusion.

### Présentation sommaire des dessins

La présente invention sera mieux comprise et d'autres avantages apparaîtront à la lecture de la description qui suit et du dessin annexé.

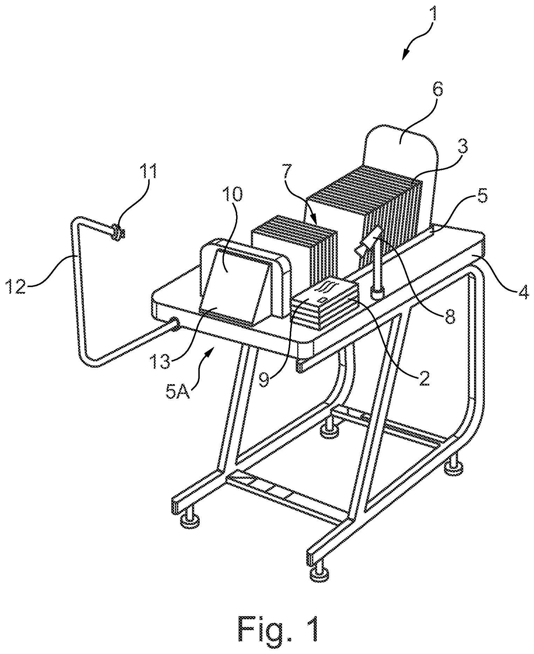

La figure 1 illustre de façon schématique un dispositif d'aide à la fusion selon l'invention.

### Description d'un mode de réalisation

Sur la figure 1, on a illustré de façon très schématique un dispositif 1 d'aide à la fusion d'objets postaux 2 qui sont notamment des objets postaux non mécanisables, comme des petits colis ou analogues.

Ces objets 2 sont à fusionner dans une pile d'articles de courrier 3 déjà triés suivant un certain ordre de tri, par exemple selon la séquence d'une tournée du facteur.

Les articles de courrier 3 sont par exemple des lettres, magazines ou autre objets postaux plats mécanisables, c'est-à-dire pouvant être triés automatiquement dans une machine de tri postal comme cela est connu de l'Homme du métier

Le dispositif 1 d'aide à la fusion se présente ici sous la forme d'un chariot monté sur patins. Sans restreindre la portée de l'invention le dispositif selon l'invention peut être monté sur tout type de support adapté mobile ou fixe.

Le chariot comporte sur sa partie supérieure 4 une table de fusion 5.

La table de fusion 5 s'étend longitudinalement entre deux extrémités et est apte à stocker la pile d'articles de courrier 3 en séquence sur chant entre lesdites extrémités.

La table de fusion présente ici une palette 6 qui sert de face d'appui à l'arrière de la pile d'articles de courrier. La palette peut être inclinée et montée entre les deux extrémités de la table de fusion pour à la fois faciliter la formation d'une fente d'insertion d'un objet 2 dans la pile d'articles de courrier 3 et être déplacée au fur et à mesure de la fusion des objets 2 dans la pile.

Le dispositif 1 comprend en outre une première caméra 8 apte à former une image numérique d'un objet postal courant 9 à fusionner dans la pile d'articles de courrier 3. Cet objet postal à fusionner est ici disposé à plat sur un flanc de la table de fusion 4.

Cette caméra 8 est fixée en hauteur ce qui permet de disposer sous cette caméra 8 une pile d'objets postaux 2 à fusionner.

Un écran d'affichage 10 est en outre disposé à l'extrémité 5A de la table de fusion 5 qui coïncide avec la tête de séquence de la pile d'articles de courrier 3.

Cet écran sert à afficher pour l'Opérateur, une indication qui est représentative d'une position d'insertion dans la pile d'articles de courrier 3 d'un objet courant 2 à fusionner.

L'Opérateur qui est par exemple assis à l'extrémité 5A de la table de fusion se trouve face à l'écran 10 et a donc dans son champ de vision la pile d'articles de courrier 3 qui s'étend longitudinalement dans la longueur de la table de fusion.

Le dispositif selon l'invention comprend en outre une seconde caméra 11 qui est positionnée pour former une image numérique de la pile d'articles de courrier 3 avec le même angle de vue que l'Opérateur.

Dans l'exemple de la figure 1, la seconde caméra 11 est placée à l'extrémité d'un bras coudé 12 qui est fixé à l'extrémité 5A de la table de fusion.

Ce bras coudé 12 peut être agencé de manière à observer la pile d'articles de courrier 3 au-dessus de l'épaule de l'Opérateur. Ainsi la seconde caméra 11 est apte à former une image numérique de la pile d'articles de courrier 3 sans avoir l'Opérateur dans son champ de vision même si l'opérateur est devant l'écran 10 et face à la pile d'articles de courrier.

Le dispositif 1 d'aide à la fusion comprend encore une unité de contrôle/commande 13 intégrée par exemple à l'écran 10 qui peut être en plus un écran tactile. L'unité de contrôle/commande 13 est apte à maintenir en mémoire des données de tri de la séquence d'articles de courrier déjà triés. Elle est reliée aux caméras 8 et 11 pour récupérer l'image d'un objet postal à fusionner et reconnaître son adresse postale. A partir de cette adresse postale l'unité de contrôle/commande 13 détermine un emplacement d'insertion dans la séquence des articles de courrier de cet objet postal et affiche sur l'écran l'image de la pile d'articles de courrier 3 telle qu'elle est perçue par l'Opérateur avec un repère visuel désignant cet emplacement d'insertion. Le repère peut être par exemple une flèche ou une représentation d'une fente d'insertion 7 dans la pile d'articles de courrier.

Sur l'écran d'affichage 10, l'unité 13 peut aussi afficher une indication représentative de la position d'insertion sous la forme d'un nombre qui indique à l'Opérateur le nombre d'articles de courrier à balayer manuellement depuis la tête de la séquence pour arriver à la position de la fente d'insertion.

Sur l'écran d'affichage 10, l'unité 13 peut aussi afficher l'image de l'article de courrier immédiatement en aval de la position d'insertion ce qui permet d'améliorer encore plus le contrôle visuel pour l'Opérateur.

Selon une variante de réalisation de l'invention, la seconde caméra 11 peut être intégrée à des lunettes de réalité augmentée destinées à être portées par l'Opérateur.

Le dispositif 1 selon l'invention peut être utilisé de la manière suivante.

L'Opérateur place sur la table de fusion une pile d'articles de courrier 3 disposés sur chant en séquence comme montré sur la figure 1.

Il place une petite pile d'objets postaux 2 à plat sur un côté de la table de fusion.

Il s'assoit à l'extrémité 5A de la table de fusion.

Il prend un à un les objets postaux 2 à fusionner. A chaque fois une image de l'objet postal courant en haut de pile est prise par la caméra 8 et une adresse postale est reconnue par l'unité de contrôle/commande 13. L'image de la pile d'articles de courrier 3 est affichée sur l'écran avec une flèche montrant visuellement à l'Opérateur la position d'insertion de cet objet postal courant dans la pile, un nombre désignant le nombre d'articles de courrier à balayer depuis la tête de séquence pour arriver à cette position d'insertion.

Depuis l'extrémité 5A de la table de fusion, l'Opérateur balaie les articles de courrier 3 et forme la fente d'insertion 7 en forme de V pour insérer dedans l'objet postal courant.

Par détection d'un appui touche actionné par l'Opérateur, l'unité de contrôle/commande 13 affiche maintenant sur l'écran 10 une nouvelle image de la pile d'articles de courrier avec un nouveau repère pour le nouvel objet postal courant qui est sous la caméra 8.

L'Opérateur procède pour ce nouvel objet postal courant comme indiqué plus haut et ainsi de suite pour tous les objets postaux en pile sous la caméra 8.

## Revendications

1. Dispositif (1) d'aide à la fusion d'objets postaux (2) dans une pile d'articles de courrier (3) déjà triés selon une certaine séquence, comprenant une table de fusion (5) qui s'étend longitudinalement entre deux extrémités et apte à stocker la pile d'articles de courrier (3) en séquence sur chant entre lesdites extrémités, une caméra (8) apte à former une image numérique d'un objet postal (9) courant à fusionner dans la pile d'articles de courrier (3), et une unité de contrôle/commande (13) avec un écran d'affichage (10) apte à afficher sur l'écran une indication représentative d'une position d'insertion de l'objet postal courant (9) dans la pile d'articles de courrier (3), **caractérisé en ce que** l'écran d'affichage (10) est disposé à une extrémité de ladite table de fusion (5) en tête de la séquence d'articles de courrier (3) en pile sur chant, de telle sorte qu'un Opérateur se trouvant face à l'écran (10) a dans son champ de vision la pile d'articles de courrier (3) qui s'étend longitudinalement, **en ce qu'**il comprend en outre une autre caméra (11) apte à former une image numérique de la pile d'articles de courrier (3) avec le même angle de vue que l'Opérateur, et **en ce que** l'unité de contrôle/commande (13) est agencée pour afficher sur l'écran d'affichage (10) l'image de la pile d'articles de courrier (3) formée par ladite autre caméra (11) et un repère désignant sur l'image de la pile d'articles de courrier (3) ladite position d'insertion.

2. Dispositif selon la revendication 1, **caractérisé en ce que** ladite autre caméra (11) est fixée à ladite extrémité de la table de fusion (5) face à l'écran (10) à l'arrière de l'Opérateur de telle manière à former l'image numérique de la pile d'articles de courrier (3) avec le même angle de vue que l'Operateur et sans avoir l'Opérateur dans son champ de vision.

3. Dispositif selon la revendication 1, **caractérisé en ce que** ladite autre caméra (11) est intégrée à des lunettes de réalité augmentée destinées à être portées par l'Opérateur.

4. Dispositif selon l'une des revendications précédentes, **caractérisé en ce que** ladite caméra (8) qui est apte à former des images numériques de l'objet postal courant (9) à fusionner est montée en hauteur sur un support fixé sur un flanc longitudinal de la table de fusion (5).

## Patentansprüche

1. Vorrichtung (1) zum Unterstützen der Zusammenführung postalischer Gegenstände (2) in einen Stapel von Sendungsgütern (3), die bereits gemäß einer bestimmten Folge sortiert sind, umfassend einen Zusammenführtisch (5), der sich längst zwischen zwei Enden erstreckt und der in der Lage ist, den Stapel Sendungsgüter (3) sequenziell auf Kante zwischen den Enden zu lagern, eine Kamera (8), die in der Lage ist, ein digitales Bild eines in den Stapel Sendungsgüter (3) zusammenzuführenden laufenden postalischen Gegenstandes (9) zu bilden, und eine Regel-/Steuereinheit (13) mit einem Anzeigebildschirm (10), der in der Lage ist, auf dem Bildschirm eine für eine Einfügeposition des laufenden postalischen Gegenstands (9) in dem Stapel Sendungsgüter (3) repräsentative Angabe anzuzeigen,
**dadurch gekennzeichnet,**
**dass** der Anzeigebildschirm (10) an einem Ende der Zusammenführtischs (5) am Kopf der Folge von Sendungsgütern (3) im Stapel auf Kante angeordnet ist derart, dass eine Bedienperson, die sich gegenüber dem Bildschirm (10) befindet, in ihrem Blickfeld den sich längst erstreckenden Stapel von Sendungsgütern (3) hat, dass sie ferner eine andere Kamera (11) umfasst, die in der Lage ist, ein digitales Bild des Stapels von Sendungsgütern (3) mit dem selben Blickwinkel wie die Bedienperson zu bilden, und dass die Regel-/Steuereinheit (13) angeordnet ist zum Anzeigen eines von der anderen Kamera (11) gebildeten Bildes des Stapels von Sendungstütern (3) auf dem Anzeigebildschirm (10) und einer Markierung, die auf dem Bild des Stapels Sendungsartikel (3) die Einfügeposition anzeigt.

2. Vorrichtung nach Anspruch 1, **dadurch gekennzeichnet, dass** die andere Kamera (11) an dem Ende des Zusammenführtischs (5) gegenüber dem Bildschirm (10) hinter der Bedienperson fixiert ist derart, dass das digitale Bild des Stapels Sendungsgüter (3) mit demselben Blickwinkel wie die Bedienperson und ohne die Bedienperson in ihrem Blickfeld erzeugt wird.

3. Vorrichtung nach Anspruch 1, **dadurch gekennzeichnet, dass** die andere Kamera (11) in einer Augmented-Reality-Brille integriert ist, die dazu bestimmt ist, von der Bedienperson getragen zu werden.

4. Vorrichtung nach einen der vorgehenden Ansprüche, **dadurch gekennzeichnet, dass** die Kamera (8), die in der Lage ist, digitale Bilder von dem zusammenzuführenden laufenden postalischen Gegenstand (9) zu erzeugen, erhöht auf einem auf einer Längsflanke des Zusammenführtischs (5) fixierten Träger montiert ist.

## Claims

1. Apparatus (1) for assisting in merging postal articles (2) with a stack of mailpieces (3) that have already been sorted into a certain sequence, said apparatus comprising a merge table (5) extending longitudinally between two ends and suitable for storing the stack of mailpieces (3) on edge between said ends, a camera (8) suitable for forming a digital image of a current postal article (9) to be merged with the stack of mailpieces (3), and a monitoring and control unit (13) with a display screen (10) and suitable for displaying on the screen an indication representative of an insertion position at which the current postal article (9) is to be inserted into the stack of mailpieces (3), said apparatus being **characterized in that** the display screen (10) is disposed at an end of the merge table (5) at the head of the sequence of mailpieces (3) in a stack and on edge, so that the longitudinally extending stack of mailpieces (3) lies within the field of vision of an operator facing the screen (10), **in that** said apparatus further comprises another camera (11) that is suitable for forming a digital image of the stack of mailpieces (3) seen from the same viewing angle as the viewing angle from which the operator sees it, and **in that** the monitoring and control unit (13) is arranged to display on the display screen (10) the image of the stack of mailpieces (3) that is formed by said other camera (11), and a marker designating said insertion position on the image of the stack of mailpieces (3).

2. Apparatus according to claim 1, **characterized in that** said other camera (11) is fastened to said end of the merge table (5) facing the screen (10) and behind the operator in such a manner as to form the digital image of the stack of mailpieces (3) from the same viewing angle as the viewing angle from which the operator sees said stack and without having the operator in its field of vision.

3. Apparatus according to claim 1, **characterized in that** said other camera (11) is integrated into augmented reality glasses designed to be worn by the operator.

4. Apparatus according to any preceding claim, **characterized in that** said camera (8), which is suitable for forming digital images of the current postal article (9) to be merged is mounted at some height on a support fastened to a longitudinal side of the merge table (5).
